# EUROPÄISCHE PATENTSCHRIFT

(11) **EP 2 013 305 B1**
(45) Veröffentlichungstag und Bekanntmachung des Hinweises auf die Patenterteilung: **14.10.2009**
(21) Anmeldenummer: 07728540.1
(22) Anmeldetag: 26.04.2007
(51) Int. Cl.: C09J 175/00, C08G 18/75, C08G 18/48, C08G 18/10, C09J 201/10, C08K 5/5455

(54) **FEUCHTIGKEITSHÄRTENDE ZUSAMMENSETZUNGEN ENTHALTEND SILANFUNKTIONELLE POLYMERE UND AMINOSILAN-ADDUKTE**
MOISTURE-HARDENING COMPOSITIONS CONTAINING SILANE-FUNCTIONAL POLYMERS AND AMINOSILANE ADDUCTS
COMPOSITIONS DURCISSANT A L'HUMIDITÉ CONTENANT DES ADDUITS DE POLYMÈRES A FONCTIONNALITÉ SILANE ET D'AMINOSILANE

(30) Priorität: 26.04.2006 EP 06113150
(43) Veröffentlichungstag der Anmeldung: 14.01.2009
(73) Patentinhaber: Sika Technology AG, 6340 Baar (CH)
(72) Erfinder: OERTLI, Marcel, 8049 Zürich (CH); JUCKER, Barbara, 8057 Zürich (CH); PFENNINGER, Ueli, 8804 Au (CH); BÜTIKOFER, Pierre-André, 8304 Wallisellen (CH)
(74) Vertreter: Sika Patent Attorneys
(86) Internationale Anmeldenummer: PCT/EP2007/054085
(87) Internationale Veröffentlichungsnummer: WO 2007/122261

(56) Entgegenhaltungen:
- EP-A- 0 831 108
- EP-A- 1 431 366
- US-A- 4 067 844
- US-B1- 6 703 453

## Beschreibung

### Technisches Gebiet

Die Erfindung betrifft feuchtigkeitshärtende Zusammensetzungen enthaltend silanfunktionelle Polymere.

### Stand der Technik

Feuchtigkeitshärtende Zusammensetzungen auf der Basis von silanfunktionellen Polymeren sind bekannt und werden unter anderem als elastische Klebstoffe, Dichtstoffe und Beschichtungen eingesetzt. Sie sind frei von Isocyanatgruppen und stellen deshalb eine aus toxikologischer Sicht bevorzugte Alternative zu den Isocyanat-haltigen Polyurethansystemen dar.

Für die meisten dieser Anwendungen, beispielsweise als Dichtmasse oder als Montageklebstoff, ist es entscheidend, dass die Zusammensetzungen schnell aushärten und im ausgehärteten Zustand über gute mechanische Eigenschaften und gute Haftungseigenschaften verfügen. Insbesondere wichtig ist eine gute Dehnbarkeit bei gleichzeitig hoher Reissfestigkeit. Diesen Anforderungen genügen solche Zusammensetzungen jedoch oft nicht.

Die Verwendung von Organoalkoxysilanen als Additive in feuchtigkeitshärtenden Zusammensetzungen auf der Basis von silanfunktionellen Polymeren ist bekannt. Sie werden üblicherweise eingesetzt, um Eigenschaften wie Haftung, Lagerstabilität und Reaktivität gezielt zu beeinflussen, wie beispielsweise beschrieben in US 3,979,344, US 5,147,927 und EP 0 819 749 A1.

US 6,703,453 offenbart feuchtigkeitshärtende Zusammensetzungen auf der Basis von silanfunktionellen Polymeren, welche unter anderem ein Addukt aus einem Aminosilan und Maleinsäure- oder Fumarsäure-Ester enthalten. Die Zusammensetzungen sollen verbesserte mechanische Eigenschaften und eine verbesserte Lagerstabilität aufweisen.

### Darstellung der Erfindung

Aufgabe der vorliegenden Erfindung ist es, feuchtigkeitshärtende Zusammensetzungen auf der Basis von silanfunktionellen Polymeren mit Endgruppen der nachfolgend dargestellten Formel (I) zur Verfügung zu stellen, welche eine erhöhte Dehnbarkeit bei gleichzeitig hoher Reaktivität, guten Haftungseigenschaften und hoher Reissfestigkeit aufweisen und sich damit insbesondere für eine Anwendung als Dichtstoffe, Klebstoffe oder Beschichtungen, insbesondere als elastische Kleb- oder Dichtstoffe, eignen.

Überraschenderweise wurde gefunden, dass feuchtigkeitshärtende Zusammensetzungen gemäss Anspruch 1 diese Aufgaben lösen. Diese Zusammensetzungen weisen gegenüber dem Stand der Technik insbesondere eine erhöhte Dehnbarkeit auf, ohne bei der Aushärtungsgeschwindigkeit und den Haftungseigenschaften wesentlich abzufallen.

Ein Aspekt der Erfindung betrifft die Verwendung eines Reaktionsproduktes, welches einen Bestandteil der Zusammensetzung darstellt, als Haftvermittler für feuchtigkeitshärtende Zusammensetzungen, welche silanfunktionelle Polymere mit den Endgruppen der Formel (I) enthalten.

Weiterhin werden Verfahren des Verklebens und des Abdichtens gemäss Anspruch 14 und 15 zur Verfügung gestellt, welche zu verklebten oder abgedichteten Artikeln gemäss Anspruch 16 führen.

Weitere Ausführungsformen sind Gegenstand der abhängigen Ansprüche.

### Wege zur Ausführung der Erfindung

Gegenstand der Erfindung sind feuchtigkeitshärtende Zusammensetzungen, umfassend
a) mindestens ein silanfunktionelles Polymer **P** mit Endgruppen der Formel (I), 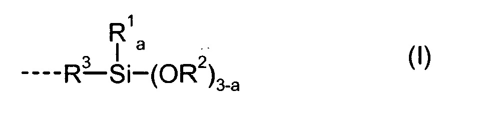 wobei
   R¹ für eine Alkylgruppe mit 1 bis 8 C-Atomen, insbesondere für eine Methyl- oder für eine Ethylgruppe, steht;
   R² für eine Acylgruppe oder Alkylgruppe mit 1 bis 5 C-Atomen, insbesondere für eine Methylgruppe oder für eine Ethylgruppe oder für eine Isopropylgruppe, steht;
   a für 0, 1 oder 2 steht, bevorzugt für 0 oder 1; und
   R³ für eine lineare oder verzweigte, gegebenenfalls cyclische, Alkylengruppe mit 2 bis 12 C-Atomen, gegebenenfalls mit aromatischen Anteilen, und gegebenenfalls mit einem oder mehreren Heteroatomen, insbesondere Stickstoffatomen, steht; und
b) mindestens ein Reaktionsprodukt **R,** hergestellt aus mindestens einem Aminosilan **A1** mit mindestens einer primären Aminogruppe und mindestens einem Silangruppen-freien Alken **M** der Formeln (II) oder (III) oder (IV) 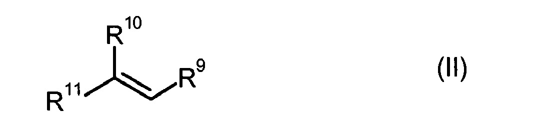 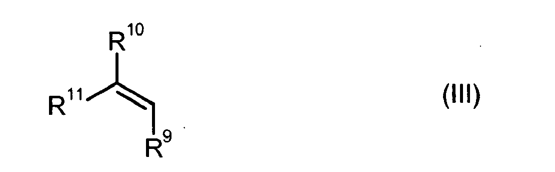 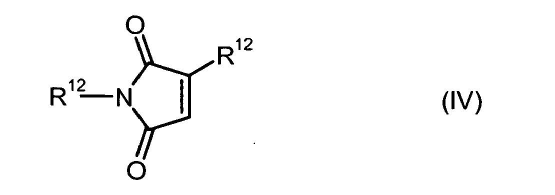
wobei
R⁹ für R¹² oder -CN steht, und
R¹⁰ für einen Substituenten, welcher ausgewählt ist aus der Gruppe bestehend aus -COOR¹², -CONHR¹², -CON(R¹²)₂, -CN, -NO₂, -PO(OR¹²)₂, -SO₂R¹² und -SO₂OR¹², steht, und
R¹¹ für einen Substituenten, welcher ausgewählt ist aus der Gruppe bestehend aus -R¹², -COOR¹², -CH₂-COOR¹² und -CN, steht,
R¹² für ein Wasserstoffatom oder einen einwertigen, gegebenenfalls Heteroatome aufweisenden, Kohlenwasserstoffrest mit 1 bis 20 C-Atomen steht.

Gestrichelte Linien in Formeln in dem vorliegenden Dokument stellen jeweils die Verbindungen mit dem jeweiligen Substituenten dar.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Mit dem Begriff "Silan" werden im vorliegenden Dokument Organoalkoxysilane bezeichnet, das heisst Verbindungen, in denen zum einen mindestens eine, üblicherweise zwei oder drei Alkoxygruppen direkt an das Silicium-Atom gebunden sind (über eine Si-O-Bindung), und die zum anderen mindestens einen direkt an das Silicium-Atom (über eine Si-C-Bindung) gebundenen organischen Rest aufweisen. Entsprechend dazu bezeichnet der Begriff "Silangruppe" die an den organischen Rest eines Organoalkoxysilans gebundene Silicium-haltige Gruppe. Die Silane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen). Der Begriff "silanfunktionell" bezeichnet Verbindungen, insbesondere Polymere, die Silangruppen aufweisen.

Mit dem Begriff "Aminosilan" werden Silane bezeichnet, welche eine Aminogruppe am organischen Rest als Substituenten tragen.

Mit dem Begriff "Isocyanatosilan" werden Silane bezeichnet, welche eine Isocyanatgruppe am organischen Rest als Substituenten tragen.

Die feuchtigkeitshärtende Zusammensetzung enthält mindestens ein silanfunktionelles Polymer **P** mit Endgruppen der bereits genannten Formel (I). Das silanfunktionelle Polymer **P** kann folgende Polymere darstellen:
(i) ein silanfunktionelles Polyurethanpolymer **P1,** erhältlich durch die Umsetzung eines Aminosilans **A2** mit einem endständige Isocyanatgruppen aufweisenden Polyurethanpolymer, oder
(ii) ein silanfunktionelles Polyurethanpolymer **P2,** erhältlich durch die Umsetzung eines Isocyanatosilans **IS** mit einem endständige Hydroxylgruppen aufweisenden Polymer, oder
(iii) ein silanfunktionelles Polymer **P3,** erhältlich durch die Hydrosilylierung eines Polymers mit endständigen Doppelbindungen.

In einer ersten Ausführungsform ist das silanfunktionelle Polymer **P ein** silanfunktionelles Polyurethanpolymer **P1,** welches erhältlich ist durch die Umsetzung eines Aminosilans **A2** mit einem endständige Isocyanatgruppen aufweisenden Polyurethanpolymer. Diese Umsetzung wird bevorzugt im stöchiometrischen Verhältnis zwischen Aminogruppen und Isocyanatgruppen oder mit einem leichten Überschuss an Aminogruppen durchgeführt, so dass das resultierende silanfunktionelle Polyurethanpolymer **P1** gänzlich frei von Isocyanatgruppen ist.

Das Aminosilan **A2** weist die Formel (V) auf, 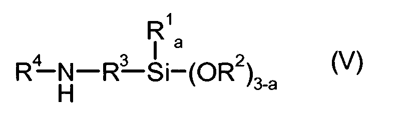
wobei R¹, R², R³ und a dieselbe Bedeutung haben wie in Formel (I), und
R⁴ für ein Wasserstoffatom oder für einen linearen oder verzweigten Kohlenwasserstoffrest mit 1 bis 20 C-Atomen steht, welcher gegebenenfalls cyclische Anteile aufweist, oder für einen Rest der Formel (VI) steht, 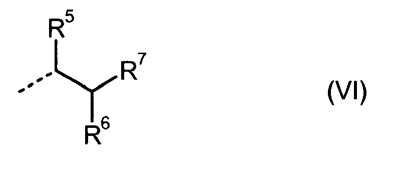 wobei
   R⁵ und R⁶, unabhängig voneinander, für ein Wasserstoffatom oder für einen Rest aus der Gruppe umfassend R⁸, -COOR⁸ und -CN, steht, und
   R⁷ für ein Wasserstoffatom oder für einen Rest aus der Gruppe umfassend -CH₂-COOR⁸, -COOR⁸, CONHR⁸, -CON(R⁸)₂, -CN, -NO₂, -PO(OR⁸)₂,-SO₂R⁸ und -SO₂OR⁸, steht,
      wobei
   R⁸ für einen, gegebenenfalls mindestens ein Heteroatom enthaltenden, Kohlenwasserstoffrest mit 1 bis 20 C-Atomen steht.

Beispiele für geeignete Aminosilane A2 sind primäre Aminosilane wie 3-Aminopropyl-trimethoxysilan, 3-Aminopropyl-dimethoxymethylsilan; sekundäre Aminosilane wie N-Butyl-3-aminopropyltrimethoxysilan, N-Phenyl-3-aminopropyl-trimethoxysilan; die Produkte aus der Michael-artigen Addition von primären Aminosilanen wie 3-Aminopropyl-trimethoxysilan oder 3-Aminopropyl-dimethoxymethylsilan an Michael-Akzeptoren wie Acrylnitril, Acryl- und Methacrylsäureestern, Acryl- oder Methacrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **A2** besonders geeignet sind sekundäre Aminosilane, d.h. Aminosilane **A2,** bei denen R⁴ in Formel (V) verschieden von H ist. Bevorzugt sind die Michael-artigen Addukte, insbesondere N-(3-Trimethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als endständige Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 - 5 Gewichts-%, bevorzugt 0.25 - 2.5 Gewichts-%, besonders bevorzugt 0.3 - 1 Gewichts-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO/OH-Verhältnis von 1.5/1 bis 2/1 erhalten werden.

Als Polyole für die Herstellung eines endständig Isocyanatgruppen aufweisenden Polyurethanpolymers können beispielsweise die folgenden handelsüblichen Polyole, oder beliebige Mischungen davon, eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol und Polyethylenglykole, die isomeren Dipropylenglykole, Tripropylenglykole und Polypropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Der Begriff "Molekulargewicht" bezeichnet im vorliegenden Dokument das Molekulargewichtsmittel Mₙ.

Ebenfalls besonders geeignet sind sogenannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Noveon) hergestellt werden können.

Diese genannten Polyole weisen ein mittleres Molekulargewicht von 250 - 30'000 g/mol, insbesondere von 1'000 - 30'000 g/mol, und eine mittlere OH-Funktionalität im Bereich von 1.6 bis 3 auf.

Als Polyole bevorzugt sind Polyoxyalkylenpolyole. Als Polyole weiterhin bevorzugt sind Diole. Besonders bevorzugt sind Polyoxyalkylendiole, insbesondere solche mit einem Ungesättigtheitsgrad tiefer als 0.02 mEq/g und einem Molekulargewicht im Bereich von 4'000 - 30'000 g/mol, insbesondere 8'000 - 30'000 g/mol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung eines endständig Isocyanatgruppen aufweisenden Polyurethanpolymers können beilspielsweise die folgenden handelsüblichen Polyisocyanate verwendet werden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Di-isocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem endständige Hydroxylgruppen aufweisenden Polymer. Diese Umsetzung erfolgt im stöchiometrischen Verhältnis zwischen den Isocyanatgruppen und den Hydroxylgruppen, beispielsweise bei Temperaturen von 20 °C bis 100 °C, gegebenenfalls unter Mitverwendung von Katalysatoren.

Als Isocyanatosilan **IS** geeignet sind Verbindungen der Formel (VII), 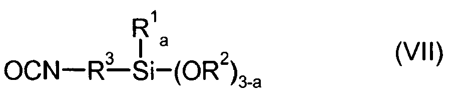 wobei R¹, R², R³ und a dieselbe Bedeutung haben wie in Formel (I).

Beispiele für geeignete Isocyanatosilane **IS** der Formel (VII) sind 3-Isocyanatopropyl-trimethoxysilan, 3-Isocyanatopropyl-dimethoxymethylsilan, und deren Analoga mit Ethoxy- oder Isopropoxygruppen anstelle der Methoxygruppen am Silicium.

Als endständige Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol.

Andererseits eignen sich auch endständige Hydroxylgruppen aufweisende Polyurethanpolymere zur Umsetzung mit Isocyanatosilanen **IS** der Formel (VII). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3 / 1 bis 4 / 1, insbesondere von 1.8 / 1 bis 2.1 / 1. Gegebenenfalls kann das Polyurethanpolymer unter Mitverwendung von Weichmachern hergestellt werden, wobei die verwendeten Weichmacher keine gegenüber Isocyanaten reaktive Gruppen enthalten. Für diese Umsetzung geeignet sind dieselben Polyole und Polyisocyanate, die bereits als geeignet zur Herstellung eines endständige Isocyanatgruppen aufweisenden Polyurethanpolymers erwähnt wurden, welches zur Herstellung eines silanfunktionellen Polyurethanpolymers **P1** verwendet wird.

Beispiele für kommerziell verfügbare silanfunktionelle Polymere **P2** sind die Produkte mit den Handelsnamen SPUR^{+®} 1010LM, 1015LM und 1050MM (alle von GE); sowie Geniosil^{®} STP-E15 und Geniosil^{®} STP-E35 (beide von Wacker Chemie AG).

Das silanfunktionelle Polymer **P** ist in einer dritten Ausführungsform ein silanfunktionelles Polymer **P3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766.

Beispiele für kommerziell verfügbare silanfunktionelle Polymere **P3** sind die Produkte mit den Handelsnamen MS-Polymer^{®} S203(H), S303(H), S227, S810, MA903 und S943, Silyl^{®} SAX220, SAX350, SAX400 und SAX725, Silyl^{®} SAT350 und SAT400, sowie XMAP^{®} SA100S und SA310S (alle von Kaneka); Polymer ST50 (von Hanse-Chemie); sowie Excestar^{®} S2410, S2420, S3430, S3630, W2450 und MSX931 (alle von Asahi Glass).

Üblicherweise ist das silanfunktionelle Polymer **P** in einer Menge von 10 - 80 Gewichts-%, bevorzugt in einer Menge von 15 - 50 Gewichts-%, bezogen auf die feuchtigkeitshärtende Zusammensetzung, vorhanden.

Die feuchtigkeitshärtende Zusammensetzung enthält neben dem silanfunktionellen Polymer **P** mindestens ein Reaktionsprodukt **R,** hergestellt aus mindestens einem Aminosilan **A1** mit mindestens einer primären Aminogruppe, und mindestens einem Silangruppen-freien Alken **M** der bereits genannten Formeln (II) oder (III) oder (IV). Das Reaktionsprodukt **R** wird auch als "adduktiertes Aminosilan" bezeichnet.

Für die Herstellung eines Reaktionsprodukts **R** geeignete Aminosilane **A1** mit mindestens einer primären Aminogruppe sind Verbindungen der Formel (VIII), 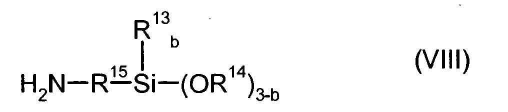 wobei
R¹³ für eine Alkylgruppe mit 1 bis 8 C-Atomen, bevorzugt für eine Methyl- oder für eine Ethylgruppe, insbesondere eine Methylgruppe, steht,
R¹⁴ für eine Acylgruppe oder eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
R¹⁵ für eine lineare oder verzweigte, gegebenenfalls cyclische, Alkylengruppe mit 1 bis 20 C-Atomen, gegebenenfalls mit aromatischen Anteilen, und gegebenenfalls mit Heteroatomen, insbesondere Ether-Sauerstoff oder sekundärem Amin-Stickstoff, steht, und
b für 0, 1 oder 2, bevorzugt für 0 oder 1, steht.

Besonders geeignete Aminosilane **A1** sind die folgenden handelsüblichen Aminosilane:
3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan, sowie deren Analoga mit Ethoxy- oder Isopropoxygruppen anstelle der Methoxygruppen am Silicium.

Besonders geeignete Aminosilane **A1** sind weiterhin sogenannte Diaminosilane, also Aminosilane, welche neben einer primären Aminogruppe eine sekundäre Aminogruppe (NH-Gruppe) tragen, welche insbesondere in γ-Stellung zum Siliciumatom steht. Beispiele für solche Diaminosilane sind N-(2-Aminoethyl)-3-aminopropyl-silane wie N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysitan und N-(2-Aminoethyl)-3-aminopropyl-triisopropoxysilan.

Besonders geeignete Aminosilane **A1** sind weiterhin sogenannte Triaminosilane, welche neben einer primären Aminogruppe zwei sekundäre Aminogruppen (NH-Gruppen) tragen, wie zum Beispiel N-(2-Aminoethyl)-N'-[3-(trimethoxysilyl)propyl]ethylendiamin.

Bevorzugt als Aminosilan **A1** sind Aminosilane der Formel (IX) 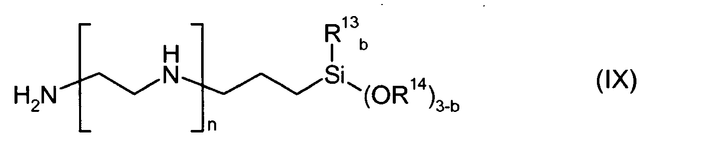 mit n = 0, 1 oder 2, und b = 0 oder 1, R¹³ = Methyl und R¹⁴ = Methyl oder Ethyl oder Isopropyl.

Das Aminosilan **A1** ist besonders bevorzugt ausgewählt aus der Gruppe bestehend aus 3-Aminopropyltrimethoxysilan, 3-Aminopropyltriethoxysilan, N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxy-silan und N-(2-Aminoethyl)-N'-[3-(trimethoxysilyl)propyl]ethylendiamin, N-(2-Aminoethyl)-N'-[3-(methyldimethoxysilyl)propyl]ethylendiamin und N-(2-Aminoethyl)-N'-[3-(triethoxysilyl)propyl]ethylendiamin.

Speziell bevorzugt sind Aminosilane **A1** mit mehr als einer Aminogruppe pro Molekül, insbesondere Aminosilane **A1** der Formel (IX) mit n = 1 oder 2. Diese Aminosilane führen zu Reaktionsprodukten **R,** welche mehr als eine Aminogruppe pro Molekül aufweisen. Da die Aminogruppen insbesondere die Hydrolyse der Silangruppen katalysieren, bewirkt ein höherer Gehalt an Aminogruppen im Reaktionsprodukt **R** eine beschleunigte Aushärtung der Zusammensetzung, was für viele Anwendungen von Vorteil ist.

Speziell bevorzugt sind insbesondere die Diaminosilane N-(2-Aminoethyl)-3-aminopropyl-trimethoxysilan, N-(2-Aminoethyl)-3-aminopropyl-methyl-dimethoxysilan und N-(2-Aminoethyl)-3-aminopropyl-triethoxysilan, sowie die Triaminosilane N-(2-aminoethyl)-N'-[3-(trimethoxysilyl)propyl]ethylendiamin, N-(2-aminoethyl)-N'-[3-(methyldimethoxysilyl)propyl]ethylendiamin und N-(2-aminoethyl)-N'-[3-(triethoxysilyl)propyl]ethylendiamin.

Für die Herstellung eines Reaktionsproduktes **R** geeignete Silangruppen-freie Alkene **M** sind Verbindungen der Formeln (II) oder (III) oder (IV) 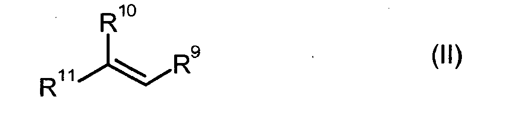 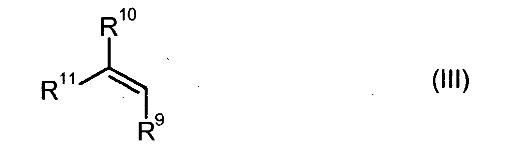 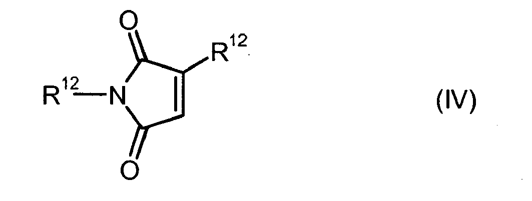 wobei
R⁹ für R¹² oder -CN steht, und
R¹⁰ für einen Substituenten, welcher ausgewählt ist aus der Gruppe bestehend aus -COOR¹², -CONHR¹², -CON(R¹²)₂, -CN, -NO₂, -PO(OR¹²)₂, -SO₂R¹² und -SO₂OR¹² steht, und
R¹¹ für einen Substituenten, welcher ausgewählt ist aus der Gruppe bestehend aus -R¹², -COOR¹², -CH₂-COOR¹² und -CN, steht,
R¹² für ein Wasserstoffatom oder einen einwertigen, gegebenenfalls Heteroatome aufweisenden, Kohlenwasserstoffrest mit 1 bis 20 C-Atomen steht.

Beispiele für geeignete Alkene **M** der Formel (II) oder (III) sind Acryl- oder Methacrylsäureester wie Methyl(meth)acrylat, Ethyl(meth)acrylat, Butyl-(meth)acrylat, Isodecyl(meth)acrylat, Lauryl(meth)acrylat, Stearyl(meth)acrylat, Tetrahydrofurfuryl(meth)acrylat, Isobornyl(meth)acrylat, Ethylenglykol-dicyclopentenylether(meth)acrylat, 2-Hydroxyethyl(meth)acrylat, 3-Hydroxypropyl-(meth)acrylat; Acryl- oder Methacrylsäureamide wie (Meth)acrylamid, Methyl-(meth)acrylamid, Butyl(meth)acrylamid, Dimethyl(meth)acrylamid, Dibutyl-(meth)acrylamid; Itaconsäurediester wie Dimethylitaconat; Zimtsäureester wie Methylcinnamat; Vinylphosphonsäurediester wie Vinylphosphonsäuredimethylester; Vinylsulfonsäureester, insbesondere Vinylsulfonsäurearylester; Vinylsulfone; Vinylnitrile wie Acrylnitril, Crotonitril, 2-Pentennitril oder Fumarodinitril; 1-Nitroethylene wie β-Nitrostyrol; und Knoevenagel-Kondensationsprodukte, wie beispielsweise solche aus Malonsäurediestern oder Malonsäuredinitril und Aldehyden wie Acetaldehyd, Propionaldehyd oder Benzaldehyd.

Bevorzugt ist das Alken **M** der Formel (II) oder (III) ausgewählt aus der Gruppe bestehend aus Tetrahydrofurfuryl-, Isobornyl-, Isodecyl-, Hexyl-, Lauryl-, Stearyl-, Ethylenglykol-dicyclopentenylether-, 2-Hydroxyethyl- und 3-Hydroxypropyl-(meth)acrylat, (Meth)acrylamid, N-Methyl(meth)acrylamid, N,N-Dimethyl(meth)acrylamid, Dimethyl-, Diethyl- und Dibutyl-phosphonat, Acrylnitril, 2-Pentennitril, Fumarodinitril und β-Nitrostyrol, sowie Mischungen aus diesen Verbindungen.

Beispiele für geeignete Alkene **M** der Formel (IV) sind Maleinimide, sowie N-Alkyl-maleinimide wie zum Beispiel N-Methyl-, N-Ethyl- und N-Propyl-maleinimid, sowie aus Fettaminen abgeleitete N-Alkyl-maleinimide wie zum Beispiel N-Decyl-, N-Lauryl- oder N-Stearyl-maleinimid, sowie technische Gemische solcher von Fettaminen abgeleiteter Maleinimide.

Durch die Umsetzung, mindestens eines Aminosilans **A1** mit mindestens einer primären Aminogruppe und mindestens eines Alkens **M** der Formeln (II), (III) oder (IV) wird das Reaktionsprodukt **R** erhalten.

Bei den Alkenen **M** handelt es sich um Michael-Akzeptoren, welche mit der primären Aminogruppe des Aminosilans **A1** eine - der Michael-Addition analogen - nucleophile Additionsreaktion eingehen können. Es ist eine wesentliche Eigenschaft der Alkene **M**, dass sie pro Molekül nur eine Doppelbindung, welche befähigt ist, als Michael-Akzeptor eine nucleophile Addition mit der primären Aminogruppe des Aminosilans **A1** einzugehen, enthalten. Es entstehen also Reaktionsprodukte **R**, welche nur eine Silangruppe pro Molekül enthalten.

Je nach Art und Struktur des Aminosilans **A1** und insbesondere des Alkens **M** kann die Umsetzung schneller oder langsamer ablaufen. Sie kann auch unvollständig verlaufen, so dass das Reaktionsprodukt **R** Anteile von unreagiertem, Aminosilan **A1** und/oder Alken **M** enthalten kann.
Das Reaktionsprodukt **R** enthält Aminosilan-Addukte der Formeln (X) oder (XI), 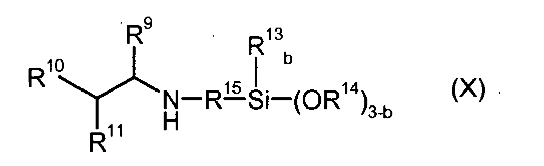 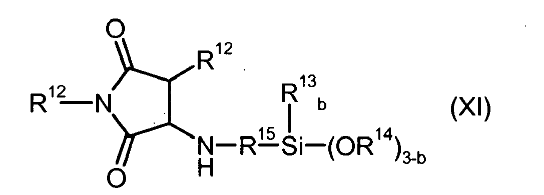 wobei R⁹, R¹⁰, R¹¹, R¹², R¹³, R¹⁴, R¹⁵ und b die bereits genannten Bedeutungen aufweisen.

Es ist bevorzugt, das Aminosilan **A1** und das Alken **M** miteinander zum Reaktionsprodukt **R** umzusetzen und dieses anschliessend mit dem silanfunktionellen Polymer **P** zu vermischen. Es ist aber auch möglich, die Umsetzung direkt im silanfunktionellen Polymer **P** durchzuführen, indem das Aminosilan **A1** und das Alken **M** getrennt voneinander mit dem silanfunktionellen Polymer **P** vermischt werden.

Die feuchtigkeitshärtende Zusammensetzung weist typischerweise einen Gehalt an Reaktionsprodukt **R** im Bereich von 0.1 - 10 Gewichts-% auf, bevorzugt 0.3 - 5 Gewichts-%.

Die Anwesenheit des Reaktionsproduktes **R** anstelle eines unadduktierten Aminosilans **A1** in der feuchtigkeitshärtenden Zusammensetzung hat den Vorteil, dass die katalysierenden und die haftverbessernden Eigenschaften des Aminosilans **A1** im Wesentlichen erhalten bleiben, während die versprödende Wirkung des unadduktierten Aminosilans **A1,** nämlich eine deutliche Abnahme der Bruchdehnung der ausgehärteten Zusammensetzung, nicht auftritt. Eine erfindungsgemässe feuchtigkeitshärtende Zusammensetzung enthaltend ein Reaktionsprodukt **R** weist also im Wesentlichen dieselbe schnelle Aushärtungsgeschwindigkeit und dieselben guten Haftungseigenschaften auf wie eine Zusammensetzung, welche das entsprechende Aminosilan **A1** unadduktiert enthält, während die Bruchdehnung erheblich höher ist.

Die erfindungsgemässe feuchtigkeitshärtende Zusammensetzung kann zusätzlich zu mindestens einem silanfunktionellen Polymer **P** und mindestens einem Reaktionsprodukt **R** weitere Komponenten enthalten. Als zusätzliche Komponenten können unter anderem die folgenden Hilfs- und Zusatzmittel vorhanden sein:
- Weichmacher, beispielsweise Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene;
- Lösemittel;
- anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, insbesondere industriell hergestellte Russe (im Folgenden als "Russ" bezeichnet), Kaoline, Aluminiumoxide, Kieselsäuren, insbesondere hochdisperse Kieselsäuren aus Pyrolyseprozessen, PVC-Pulver oder Hohlkugeln. Bevorzugte Füllstoffe sind Russ, Calciumcarbonate, insbesondere feinteilige beschichtete Calciumcarbonate, hochdisperse Kieselsäuren aus Pyrolyseprozessen, sowie Kombinationen aus diesen Füllstoffen.
- Fasern, beispielsweise aus Polyethylen;
- Pigmente; beispielsweise Titandioxid;
- Katalysatoren, beispielsweise Metallkatalysatoren in Form von Organozinnverbindungen wie Dibutylzinndilaurat und Dibutylzinndiacetylacetonat, Bismut-organische Verbindungen oder Bismut-Komplexe;
   Aminogruppenhaltige Verbindungen, beispielsweise 1,4-Diazabicyclo[2.2.2]-octan und 2,2'-Dimorpholinodiethylether, sowie Aminosilane, insbesondere die erwähnten Aminosilane **A1** oder **A2.**
   Bevorzugte Katalysatoren sind einerseits aminogruppenhaltige Katalysatoren in Form von Aminosilanen, insbesondere Aminosilane **A1,**
   sowie Metallkatalysatoren, insbesondere Organozinnverbindungen wie Dibutylzinndilaurat und Dibutylzinndiacetylacetonat, Bismut-organische Verbindungen oder Bismut-Komplexe und Titankatalysatoren und Kombinationen verschiedener Metallkatalysatoren,
   sowie Kombinationen aus Aminosilanen und Metallkatalysatoren.
- Rheologie-Modifizierer, wie beispielsweise Verdickungsmittel, zum Beispiel Harnstoffverbindungen, Polyamidwachse, Bentonite oder pyrogene Kieselsäuren;
- weitere Haftvermittler, beispielsweise Epoxysilane, (Meth)acrylsilane, Anhydridosilane oder Addukte der vorgenannten Silane mit primären Aminosilanen, sowie Harnstoffsilane;
- Vernetzer, beispielsweise silanfunktionelle Oligo- und Polymere;
- Trocknungsmittel, zum Beispiel Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe;
- Stabilisatoren gegen Wärme, Licht- und UV-Strahlung;
- flammhemmende Substanzen;
- oberflächenaktive Substanzen, wie beispielsweise Netzmittel, Verlaufsmittel, Entlüftungsmittel oder Entschäumer;
- Biozide, wie beispielsweise Algizide, Fungizide oder das Pilzwachstum hemmende Substanzen;
sowie weitere üblicherweise in feuchtigkeitshärtenden Zusammensetzungen eingesetzte Substanzen.

Es ist vorteilhaft, darauf zu achten, dass sowohl das Reaktionsprodukt **R** als auch allfällige weitere Komponenten die Lagerstabilität der Zusammensetzung nicht beeinträchtigen, das heisst, dass sie während der Lagerung die zur Vernetzung führende Reaktion der in der Zusammensetzung enthaltenen Silangruppen nicht in signifikantem Ausmass auslösen dürfen. Insbesondere bedeutet dies, dass solche weiteren Komponenten bevorzugt kein oder höchstens Spuren von Wasser enthalten. Es kann sinnvoll sein, gewisse Komponenten vor dem Einmischen in die Zusammensetzung chemisch oder physikalisch zu trocknen.

Bevorzugt enthält die feuchtigkeitshärtende Zusammensetzung Weichmacher, Füllstoffe und Katalysatoren.

Die beschriebene feuchtigkeitshärtende Zusammensetzung wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität, der Auspressmenge oder der Auspresskraft ermittelt.

Die Zusammensetzung enthält vorzugsweise keine freien Isocyanatgruppen. Eine derartige isocyanatfreie Zusammensetzung ist vom toxikologischen Standpunkt her vorteilhaft.

Es wurde gefunden, dass das beschriebene Reaktionsprodukt **R** als Haftvermittler für silanfunktionelle Polymere mit Endgruppen der Formel (I) verwendet werden kann.

Weiterhin wurde gefunden, dass das beschriebene Reaktionsprodukt **R** als Katalysator für silanfunktionelle Polymere mit Endgruppen der Formel (I) verwendet werden kann.

Bei der Applikation der beschriebenen feuchtigkeitshärtenden Zusammensetzung auf mindestens einen Festkörper oder Artikel kommen die Silangruppen des Polymers und der Silane in Kontakt mit Feuchtigkeit. Die Silangruppen haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen). Als Ergebnis dieser Reaktionen, welche durch den Einsatz von Katalysatoren beschleunigt werden können, härtet die Zusammensetzung schliesslich aus; dieser Prozess wird auch als Vernetzung bezeichnet. Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die beschriebene Zusammensetzung härtet bei Kontakt mit Feuchtigkeit aus. Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt demnach ein Mass für die Aushärtungsgeschwindigkeit dar. Typischerweise ist eine derartige Hautbildungszeit von bis zu 4 Stunden bei 23 °C und 50% relative Luftfeuchtigkeit erstrebenswert. Die Zusammensetzung verfügt im ausgehärteten Zustand über eine hohe mechanische Festigkeit bei einer hohen Dehnbarkeit, sowie über gute Haftungseigenschaften. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen, welche eine schnelle Aushärtung erfordern und hohe Anforderungen an die Dehnbarkeit stellen, bei gleichzeitig hohen Anforderungen an die Haftungseigenschaften und die Festigkeiten.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln, wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau; sowie das Beschichten von diversen Substraten, beispielsweise als Anstrich, Lack, Primer, Versiegelung oder Schutzbeschichtung, oder als Bodenbelag, beispielsweise für Büros, Wohnbereiche, Spitäler, Schulen, Lagerhallen und Parkgaragen.

In einer bevorzugten Ausführungsform wird die beschriebene Zusammensetzung als elastischer Klebstoff oder Dichtstoff eingesetzt.

Als elastischer Klebstoff weist die Zusammensetzung typischerweise eine Bruchdehnung von mindestens 200% und als elastischer Dichtstoff eine solche von mindestens 500% bei Raumtemperatur auf.

In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff durch Kontakt mit Feuchtigkeit aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.

In der Anwendung als Dichtstoff wird die Zusammensetzung zwischen die Substrate **S1** und **S2** appliziert und anschliessend erfolgt die Aushärtung der Zusammensetzung durch Kontakt mit Feuchtigkeit. Üblicherweise wird der Dichtstoff in eine Fuge eingepresst.

In beiden Anwendungen kann das Substrat **S1** gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farbanstrich und Lacke, insbesondere Automobildecklacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Nach dem Verkleben oder Abdichten der Substrate **S1** und **S2** mittels einer erfindungsgemässen Zusammensetzung wird ein verklebter oder abgedichteter Artikel erhalten. Ein derartiger Artikel kann ein Bauwerk sein, insbesondere ein Bauwerk des Hoch- oder Tiefbaus, oder er kann ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon.

Für eine Anwendung der Zusammensetzung als Dichtstoff für beispielsweise Fugen im Hoch oder Tiefbau, oder für eine Anwendung als Klebstoff für elastische Verklebungen, beispielsweise im Fahrzeugbau, weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Substrat aufgetragen. Geeignete Methoden zum Auftragen sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters.

Ein Dichtstoff oder Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Ein Klebstoff für elastische Verklebungen, beispielsweise im Fahrzeugbau, wird bevorzugt in Form einer Raupe mit einer im Wesentlichen runden oder dreieckigen Querschnittsfläche aufgetragen.

Elastische Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

Die erfindungsgemässe feuchtigkeitshärtende Zusammensetzung enthaltend mindestens ein silanfunktionelles Polymer **P** mit Endgruppen der Formel (I) und mindestens einem Reaktionsprodukt **R** härtet schnell aus und weist eine sehr hohe Dehnbarkeit bei gleichzeitig hoher Reaktivität, guten Haftungseigenschaften und hoher Reissfestigkeit auf. Im Vergleich mit Systemen nach dem Stand der Technik, welche anstelle eines Reaktionsproduktes **R** ein unadduktiertes Aminosilan **A1** enthalten, ist die Dehnbarkeit deutlich erhöht.

### Beispiele

### Beschreibung der Prüfmethoden

Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Schergeschwindigkeit 10 bis 1000 s⁻¹) gemessen.

Die **Hautbildungszeit** (Zeit bis zur Klebefreiheit, "tack-free time") als Mass für die Aushärtegeschwindigkeit wurde bestimmt bei 23 °C und 50% relativer Luftfeuchtigkeit.

Die **Zugfestigkeit** und die **Bruchdehnung** wurden bestimmt nach DIN 53504 (Zuggeschwindigkeit: 200 mm/min) an während 14 Tagen im Normklima (23±1 °C, 50±5% relative Luftfeuchtigkeit) ausgehärteten Filmen mit einer Schichtdicke von 2 mm.

Die **Haftungen** wurden folgendermassen bestimmt:

Zur Prüfung der Haftung wurden Aluminium AIMgSi1 und PVC in Form von Plättchen benutzt, erhältlich bei der Firma Rocholl, Schönbrunn, Deutschland. Die Plättchen wurden mit Sika^{®} Cleaner-205 gereinigt. Nach einer Ablüftzeit von 10 Minuten wurde die jeweilige Zusammensetzung in Form einer Raupe aus einer Kartusche auf jedes Plättchen aufgetragen. Das mit der Raupe beschichtete Plättchen wurde dann während 7 Tagen im Normklima (23±1 °C, 50±5% relative Luftfeuchtigkeit) gelagert, worauf die Haftung geprüft wurde. Zur Prüfung der Haftung wurde die ausgehärtete Raupe jeweils an einem Ende knapp über der Oberfläche des Plättchens (Klebefläche) eingeschnitten. Das eingeschnittene Ende der Raupe wurde von Hand festgehalten und dann vorsichtig und langsam, schälend in Richtung des anderen Raupenendes, von der Plättchenoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Plättchens angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Plättchen gezogen bzw. geschnitten. Die Bewertung der Hafteigenschaften erfolgte anhand dem nach dem Abziehen der Raupe auf der Substratoberfläche zurückbleibenden ausgehärteten Dicht- oder Klebstoff (Kohäsionsbruch), und zwar durch Abschätzen des kohäsiven Anteils der Haftfläche, gemäss folgender Skala:
1 = mehr als 95% Kohäsionsbruch
2 = 75 - 95% Kohäsionsbruch
3 = 25 - 75% Kohäsionsbruch
4 = weniger als 25% Kohäsionsbruch
Testresultate mit Kohäsionsbruchwerten von weniger als 75%, also Werte von 3 und 4, gelten als ungenügend.

### a) Herstellung der silanfunktionellen Polymere P

### Polymer 1

Unter Stickstoffatmosphäre wurden 1000 g Acclaim^{®} 12200 (Bayer; low monol Polyoxypropylendiol, OH-Zahl 11.0 mg KOH/g, Wassergehalt ca. 0.02 Gewichts-%), 36.1 g Isophorondiisocyanat (IPDI; Vestanat^{®} IPDI, Degussa), 292.3 g Diisodecylphthalat (DIDP; Palatinol^{®} Z, BASF) und 0.23 g Di-n-butylzinn-dilaurat unter stetigem Rühren auf 90 °C aufgeheizt und auf dieser Temperatur belassen, bis der Gehalt an freien Isocyanatgruppen einen Wert von 0.33 Gewichts-% erreicht hatte. Anschliessend wurden 37.7 g N-(3-Trimethoxysilyl-propyl)-amino-bernsteinsäure-diethylester eingemischt und die Mischung während 4 Stunden bei 90 °C gerührt, bis kein freies Isocyanat mittels IR-Spektroskopie mehr nachgewiesen wurde. Das Produkt wurde auf Raumtemperatur abgekühlt und unter Ausschluss von Feuchtigkeit aufbewahrt (theoretischer Polymergehalt = 78.6%).

N-(3-Trimethoxysilyl-propyl)-amino-bernsteinsäure-diethylester wurde wie folgt hergestellt: 51.0 g 3-Aminopropyl-trimethoxysilan (Silquest^{®} A-1110, GE Advanced Materials) wurden vorgelegt. Unter gutem Rühren wurden bei Raumtemperatur langsam 49.0 g Maleinsäure-diethylester zugegeben und die Mischung während 8 Stunden bei Raumtemperatur gerührt.

### Polymer 2

Unter Stickstoffatmosphäre wurden 1000 g Polyol Acclaim^{®} 12200 (Bayer; low monol Polyoxypropylendiol, OH-Zahl 11.0 mg KOH/g, Wassergehalt ca. 0.02 Gewichts-%), 43.6 g Isophorondiisocyanat (IPDI; Vestanat^{®} IPDI, Degussa), 126.4 g Diisodecylphthalat (DIDP; Palatinol^{®} Z, BASF) und 0.12 g Di-n-butyl-zinndilaurat unter stetigem Rühren auf 90 °C aufgeheizt und auf dieser Temperatur belassen, bis der titrimetrisch bestimmte Gehalt an freien Isocyanatgruppen einen Wert von 0.63 Gewichts-% erreicht hatte. Anschliessend wurden 62.3 g N-(3-Trimethoxysilyl-propyl)-amino-bernsteinsäure-diethylester eingemischt und die Mischung während 4 Stunden bei 90 °C gerührt, bis kein freies Isocyanat mittels IR-Spektroskopie mehr nachgewiesen wurde. Das Produkt wurde auf Raumtemperatur abgekühlt und unter Ausschluss von Feuchtigkeit aufbewahrt (theoretischer Polymergehalt = 89.7%).

N-(3-Trimethoxysilyl-propyl)-amino-bernsteinsäure-diethylester wurde wie bei ***Polymer 1*** beschrieben hergestellt.

### b) Herstellung der Reaktionsprodukte R

### Reaktionsprodukt R1

Zu 75.0 g (0.34 mol) N-(2-Aminoethyl)-3-aminopropyl-trimethoxysilan (Dynasylan^{®} DAMO, Degussa) wurden unter gutem Rühren 71.5 g (0.34 mol) Isodecyl-acrylat (Sartomer^{®} SR-395, Sartomer) gegeben und während 2 Stunden bei Raumtemperatur gerührt. Es entstand eine blassgelbe Flüssigkeit mit einer Viskosität bei 20 °C von 40 mPa·s.

### Reaktionsprodukt R2

Zu 22.0 g (0.12 mol) 3-Aminopropyl-trimethoxysilan (Silquest^{®} A-1110, GE Advanced Materials) wurden unter gutem Rühren 26.0 g (0.12 mol) Isodecyl-acrylat (Sartomer^{®} SR-395, Sartomer) gegeben und während 2 Stunden bei Raumtemperatur gerührt. Es entstand eine blassgelbe, viskose Flüssigkeit.

### Reaktionsprodukt R3

Zu 34.7 g (0.16 mol) N-(2-Aminoethyl)-3-aminopropyl-trimethoxysilan (Dynasylan^{®} DAMO, Degussa) wurden unter gutem Rühren 32.5 g (0.16 mol) Isobornyl-acrylat (Sartomer^{®} SR-506, Sartomer) gegeben und während 2 Stunden bei Raumtemperatur gerührt. Es entstand eine blassgelbe, viskose Flüssigkeit.

### Reaktionsprodukt R4

Zu 22.38 g (0.125 mol) 3-Aminopropyl-trimethoxysilan (Silquest^{®} A-1110, GE Advanced Materials) wurden unter gutem Rühren 26.0 g (0.125 mol) Isobornyl-acrylat (Sartomer^{®} SR-506, Sartomer) gegeben und während 2 Stunden bei Raumtemperatur gerührt. Es entstand eine blassgelbe, viskose Flüssigkeit.

### Reaktionsprodukt R5

Zu 19.5 g (0.09 mol) N-(2-Aminoethyl)-3-aminopropyl-trimethoxysilan (Dynasylan^{®} DAMO, Degussa) wurden unter gutem Rühren 19.5 g (0.09 mol) Isobornyl-methacrylat (Sartomer^{®} SR-423, Sartomer) gegeben und während 3 Tagen bei 55 °C belassen. Es entstand eine blassgelbe, viskose Flüssigkeit.

### Reaktionsprodukt R6

Zu 37.1 g (0.17 mol) N-(2-Aminoethyl)-3-aminopropyl-trimethoxysilan (Dynasylan^{®} DAMO, Degussa) wurden unter gutem Rühren 26.0 g (0.17 mol) Tetrahydrofurfuryl-acrylat (Sartomer^{®} SR-285, Sartomer) gegeben und während 2 Stunden bei Raumtemperatur gerührt. Es entstand eine rötliche, viskose Flüssigkeit.

### Reaktionsprodukt R7

Zu 34.0 g (0.15 mol) N-(2-Aminoethyl)-3-aminopropyl-trimethoxysilan (Dynasylan^{®} DAMO, Degussa) wurden unter gutem Rühren 26.0 g (0.15 mol) Tetrahydrofurfuryl-methacrylat (Sartomer^{®} SR-203, Sartomer) gegeben und während 3 Tagen bei 55 °C belassen. Es entstand eine rötliche, viskose Flüssigkeit.

### Reaktionsprodukt R8

Zu 24.1 g (0.11 mol) N-(2-Aminoethyl)-3-aminopropyl-trimethoxysilan (Dynasylan^{®} DAMO, Degussa) wurden unter gutem Rühren 26.0 g (0.11 mol) Lauryl-acrylat (Sartomer^{®} SR-335, Sartomer) gegeben und während 2 Stunden bei Raumtemperatur gerührt. Es entstand eine blassgelbe, viskose Flüssigkeit.

### Reaktionsprodukt R9

Zu 22.8 g (0.10 mol) N-(2-Aminoethyl)-3-aminopropyl-trimethoxysilan (Dynasylan^{®} DAMO, Degussa) wurden unter gutem Rühren 26.0 g (0.10 mol) Lauryl-methacrylat (Sartomer^{®} SR-313E, Sartomer) gegeben und während 3 Tagen bei 55 °C belassen. Es entstand eine blassgelbe, viskose Flüssigkeit.

### Reaktionsprodukt R10

Zu 23.3 g (0.105 mol) N-(2-Aminoethyl)-3-aminopropyl-trimethoxysilan (Dynasylan^{®} DAMO, Degussa) wurden unter gutem Rühren 26.0 g (0.105 mol) Ethylenglykol-dicyclopentenylether-acrylat (Aldrich, CAS-Nr. 65983-31-5) gegeben und während 2 Stunden bei Raumtemperatur gerührt. Es entstand eine blassgelbe Flüssigkeit mit einer Viskosität von 380 mPa·s.

### Reaktionsprodukt R11

Zu 22.2 g (0.10 mol) N-(2-Aminoethyl)-3-aminopropyl-trimethoxysilan (Dynasylan^{®} DAMO, Degussa) wurden unter gutem Rühren 5.3 g (0.10 mol) Acrylnitril gegeben und während 2 Stunden bei Raumtemperatur gerührt. Es entstand eine blassgelbe Flüssigkeit mit einer Viskosität von 30 mPa·s.

### Reaktionsprodukt R12

Zu 22.2 g (0.10 mol) N-(2-Aminoethyl)-3-aminopropyl-trimethoxysilan (Dynasylan^{®} DAMO, Degussa) wurden unter gutem Rühren 8.1 g (0.10 mol) (cis)-2-Penten-nitril gegeben und während 10 Stunden bei 45 °C gerührt. Es entstand eine blassgelbe Flüssigkeit mit einer Viskosität von 18 mPa·s.

### Reaktionsprodukt R13

Zu 22.2 g (0.10 mol) N-(2-Aminoethyl)-3-aminopropyl-trimethoxysilan (Dynasylan^{®} DAMO, Degussa) wurden unter gutem Rühren 9.9 g (0.10 mol) N,N-Dimethyl-acrylamid gegeben und während 2 Stunden bei Raumtemperatur gerührt. Es entstand eine blassgelbe Flüssigkeit mit einer Viskosität von 50 mPa·s.

### Reaktionsprodukt R14

Zu 7.99 g (36 mmol) N-(2-Aminoethyl)-3-aminopropyl-trimethoxysilan (Dynasylan^{®} DAMO, Degussa) in 10 ml Tetrahydrofuran wurden unter gutem Rühren 5.0 g (36 mmol) N-Propyl-maleinimid, gelöst in 10 ml Tetrahydrofuran, gegeben und während 5 Stunden bei Raumtemperatur gerührt. Das Reaktionsgemisch wurde am Rotationsverdampfer eingeengt. Es wurden 12.86 g einer gelblichen, viskosen Flüssigkeit erhalten.

### Reaktionsprodukt R15 (Vergleich)

Zu 22.2 g (0.10 mol) N-(2-Aminoethyl)-3-aminopropyl-trimethoxysilan (Dynasylan^{®} DAMO, Degussa) wurden unter gutem Rühren 17.2 g (0.10 mol) Maleinsäurediethylester gegeben und während 2 Stunden bei Raumtemperatur gerührt. Es entstand eine blassgelbe, viskose Flüssigkeit. Am Folgetag wurde anhand der gemessenen Aminzahl und dem FT-IR-Spektrum festgestellt, dass das Reaktionsprodukt grossenteils als cyclisches 1,4-Piperazin-2-on-Derivat vorlag, wie in US 6,703,453 in der Formel (IV) beschrieben.

### Reaktionsprodukt R16 (Vergleich)

Zu 24.4 g (0.11 mol) N-(2-Aminoethyl)-3-aminopropyl-trimethoxysilan (Dynasylan^{®} DAMO, Degussa) wurden unter gutem Rühren 32.5 g (0.11 mol) Trimethylolpropan-triacrylat (Sartomer^{®} SR-351, Sartomer) gegeben. Die viskose Mischung gelierte unter Erwärmung innerhalb von Minuten. Das Material konnte deshalb nicht als Zusatz in einer feuchtigkeitshärtenden Zusammensetzung verwendet werden.

### Reaktionsprodukt R17 (Vergleich)

Zu 24.4 g (0.11 mol) N-(2-Aminoethyl)-3-aminopropyl-trimethoxysilan (Dynasylan^{®} DAMO, Degussa) wurden unter gutem Rühren 24.9 g (0.11 mol) 1,6-Hexandiol-diacrylat (Sartomer^{®} SR-238, Sartomer) gegeben. Die viskose Mischung gelierte unter Erwärmung innerhalb von Minuten. Das Material konnte deshalb nicht als Zusatz in einer feuchtigkeitshärtenden Zusammensetzung verwendet werden.

### c) Herstellung der Harnstoff-Verdicker-Paste

In einem Vakuummischer wurden 1000 g Diisodecylphthalat und 160 g 4,4'-Diphenylmethandiisocyanat vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Die Harnstoff-Verdicker-Paste enthält 20 Gewichts-% Harnstoff-Verdicker in 80 Gewichts-% Diisodecylphthalat.

### d) Herstellung von Dichtstoffen

### Basisformulierung 1

In einem Vakuummischer wurden 2700 g Polymer 1, 1295 g Diisodecylphtalat (DIDP; Palatinol^{®} Z, BASF), 100 g Vinyltrimethoxysilan (Silquest^{®} A-171, GE Advanced Materials), 1200 g Harnstoff-Verdicker-Paste, 4500 g gefälltes beschichtetes Calciumcarbonat (Socal^{®} U1S2, Solvay), 20 g N-(2-Aminoethyl)-3-aminopropyl-trimethoxysilan (Dynasylan^{®} DAMO, Degussa) und 5 g Dibutylzinndilaurat zu einer homogenen Paste verarbeitet, welche unter Ausschluss von Feuchtigkeit aufbewahrt wurde.

### Basisformulierung 2

In einem Vakuummischer wurden 2700 g MS-Polymer S203H (silanfunktionelles Polyetherpolymer von Kaneka), 1250 g Diisodecylphtalat (DIDP; Palatinol^{®} Z, BASF), 100 g Vinyltrimethoxysilan (Silquest^{®} A-171, GE Advanced Materials), 1200 g Harnstoff-Verdicker-Paste, 4500 g gefälltes beschichtetes Calciumcarbonat (Socal^{®} U1S2, Solvay), 20 g N-(2-Aminoethyl)-3-aminopropyl-trimethoxysilan (Dynasylan^{®} DAMO, Degussa) und 50 g Dibutylzinndiacetylacetonat zu einer homogenen Paste verarbeitet, welche unter Ausschluss von Feuchtigkeit aufbewahrt wurde.

### Beispiele 1 bis 5

In einem Vakuummischer wurde die ***Basisformulierung 1*** gemäss Tabelle 1 mit einem am Vortag hergestellten Reaktionsprodukt R oder einem Aminosilan **A1** in der angegebenen Menge bei Raumtemperatur homogen vermischt und die so erhaltenen Dichtstoffe unter Ausschluss von Feuchtigkeit in Kartuschen abgefüllt. Von diesen Dichtstoffen wurden am Folgetag Prüfkörper angefertigt, die Prüfungen wie beschrieben durchgeführt und die Resultate in Tabelle 1 zusammengestellt.

Aus der Tabelle 1 ist ersichtlich, dass die erfindungsgemässen Dichtstoffe der Beispiele ***1*** bis ***3***, welche unterschiedliche Mengen des Reaktionsproduktes **R1** enthalten, rasch eine Haut bilden, gute mechanische Eigenschaften aufweisen, insbesondere eine hohe Dehnbarkeit, und gute Haftungseigenschaften aufweisen.

Der Dichtstoff des Vergleichsbeispiels ***4***, welcher kein Reaktionsprodukt ***R1*** enthält, weist zwar ebenfalls gute mechanische Eigenschaften auf; die Hautbildungszeit ist jedoch deutlich länger, und die Haftungseigenschaften sind schlechter.

Der Dichtstoff des Vergleichsbeispiels ***5***, welcher anstelle des Reaktionsprodukts ***R1*** zusätzliches Aminosilan **A1** enthält, zeigt eine kurze Hautbildungszeit und gute Haftungseigenschaften; die Bruchdehnung ist jedoch unbefriedigend tief.

**Tabelle 1: Zusammensetzungen und Prüfresultate der Dichtstoffe der Beispiele 1 bis 3 und der Vergleichsbeispiele 4 und 5. Mengenangaben sind in Gewichtsteilen.**

| **Beispiel** | ***1*** | ***2*** | ***3*** | ***4*** (Vgl.) | ***5*** (Vgl.) |
|---|---|---|---|---|---|
| **Zusammensetzung:** | | | | | |
| *Basisformulierung 1* | 100 | 100 | 100 | 100 | 100 |
| Aminosilan **A1** | - | - | - | - | DAMO¹ |
| Menge | | | | | 1.0 |
| Reaktionsprodukt **R** | ***R1*** | ***R1*** | ***R1*** | - | - |
| Menge | 0.5 | 1.8 | 3.0 | | |
| **Prüfergebnisse:** | | | | | |
| Hautbildungszeit [min] | 105 | 70 | 60 | 420 | 60 |
| Zugfestigkeit [MPa] | 2.8 | 2.5 | 2.1 | 2.6 | 2.0 |
| Bruchdehnung [%] | 940 | 980 | 920 | 830 | 530 |
| **Haftung:** | | | | | |
| Aluminium AIMgSi1 | 1 | 1 | 1 | 3 | 1 |
| PVC | 1 | 1 | 1 | 3 | 1 |

| | | | | | |
|---|---|---|---|---|---|
| ¹ DAMO = Dynasylan^{®} DAMO (Degussa). | | | | | |

### Beispiele 6 bis 18

In einem Vakuummischer wurde die ***Basisformulierung 1*** gemäss Tabelle 2 jeweils mit einem am Vortag hergestellten Reaktionsprodukt **R** in der angegebenen Menge bei Raumtemperatur homogen vermischt und die so erhaltenen Dichtstoffe unter Ausschluss von Feuchtigkeit in Kartuschen abgefüllt. Von diesen Dichtstoffen wurden am Folgetag Prüfkörper angefertigt, die Prüfungen wie beschrieben durchgeführt und die Resultate in Tabelle 2 zusammengestellt.

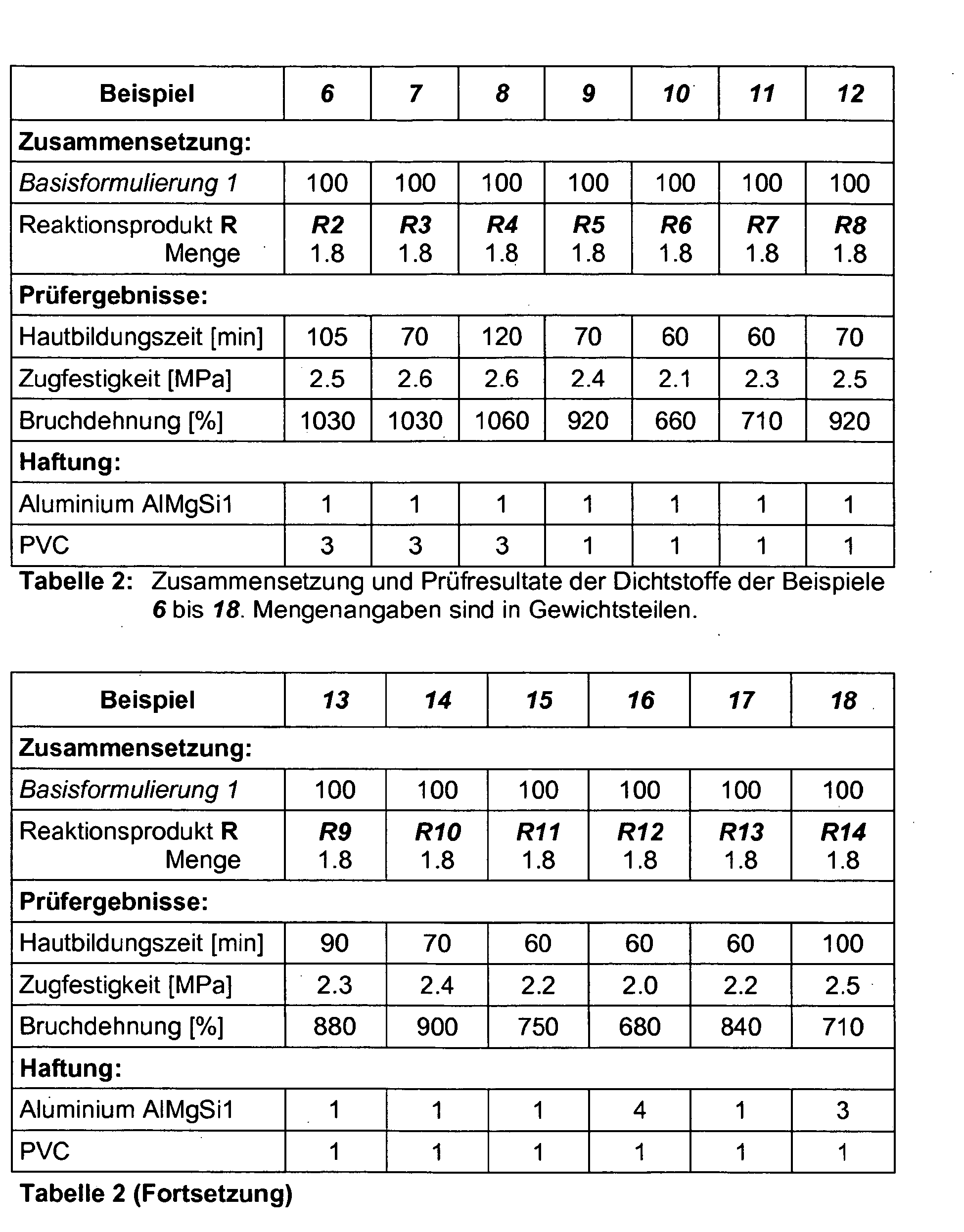

Aus der Tabelle 2 ist ersichtlich, dass alle Dichtstoffe der Beispiele ***6*** bis ***18*** eine kurze Hautbildungszeit und gute mechanische Eigenschaften aufweisen, insbesondere eine hohe Dehnbarkeit. Die Haftungseigenschaften sind mehrheitlich gut.

### Beispiele 19 bis 21

In einem Vakuummischer wurde die ***Basisformulierung 2*** gemäss Tabelle 3 jeweils mit einem am Vortag hergestellten Reaktionsprodukt **R** oder einem Aminosilan **A1** in der angegebenen Menge bei Raumtemperatur homogen vermischt und die so erhaltenen Dichtstoffe unter Ausschluss von Feuchtigkeit in Kartuschen abgefüllt. Von diesen Dichtstoffen wurden am Folgetag Prüfkörper angefertigt, die Prüfungen wie beschrieben durchgeführt und die Resultate in Tabelle 3 zusammengestellt.

**Tabelle 3: Zusammensetzung und Prüfresultate der Dichtstoffe der Beispiele 19 und 20 und des Vergleichsbeispiels 21. Mengenangaben sind in Gewichtsteilen.**

| **Beispiel** | ***19*** | ***20*** | ***21*** (Vgl.) |
|---|---|---|---|
| **Zusammensetzung:** | | | |
| *Basisformulierung 2* | 100 | 100 | 100 |
| Aminosilan **A1** | - | - | DAMO¹ |
| Menge | | | 1.0 |
| Reaktionsprodukt **R** | ***R1*** | ***R3*** | - |
| Menge | 1.8 | 1.8 | |
| **Prüfergebnisse:** | | | |
| Hautbildungszeit [min] | 105 | 105 | 60 |
| Zugfestigkeit [MPa] | 1.1 | 1.0 | 1.3 |
| Bruchdehnung [%] | 760 | 880 | 650 |
| **Haftung:** | | | |
| Aluminium AIMgSi1 | 2 | 1 | 2 |
| PVC | 3 | 3 | 2 |

| | | | |
|---|---|---|---|
| ¹ DAMO = Dynasylan^{®} DAMO (Degussa). | | | |

Aus der Tabelle 3 ist ersichtlich, dass die erfindungsgemässen Dichtstoffe der Beispiele ***19*** und ***20*** eine erhöhte Dehnbarkeit im Vergleich zum Dichtstoff des Vergleichsbeispiels ***21*** aufweisen, welcher, anstelle einer Reaktionsproduktes **R**, zusätzliches Aminosilan **A1** enthält. Die Haftungseigenschaften der drei Beispiele sind vergleichbar.

### e) Herstellung von Klebstoffen

### Basisformulierung 3

In einem Vakuummischer wurden 3500 g Polymer 2, 1290 g Diisodecylphtalat (DIDP; Palatinol^{®} Z, BASF), 100 g Vinyltrimethoxysilan (Silquest^{®} A-171, GE Advanced Materials), 4650 g gefälltes beschichtetes Calciumcarbonat (Socal^{®} U1S2, Solvay), 250 g pyrogene Kieselsäure, 20 g N-(2-Aminoethyl)-3-aminopropyl-trimethoxysilan (Dynasylan^{®} DAMO, Degussa), und 10 g Dibutylzinndilaurat zu einer homogenen Paste verarbeitet, welche unter Ausschluss von Feuchtigkeit aufbewahrt wurde.

### Beispiele 22 bis 27

In einem Vakuummischer wurde die ***Basisformulierung 3*** gemäss Tabelle 4 jeweils mit einem am Vortag hergestellten Reaktionsprodukt **R** oder einem Aminosilan **A1** in der angegebenen Menge bei Raumtemperatur homogen vermischt und die so erhaltenen Klebstoffe unter Ausschluss von Feuchtigkeit in Kartuschen abgefüllt. Von diesen Klebstoffen wurden am Folgetag Prüfkörper angefertigt, die Prüfungen wie beschrieben durchgeführt und die Resultate in Tabelle 4 zusammengestellt.

Aus der Tabelle 4 ist ersichtlich, dass die erfindungsgemässen Klebstoffe der Beispiele ***22*** bis ***24*** eine kurze Hautbildungszeit, gute mechanische Eigenschaften, insbesondere eine hohe Dehnbarkeit, und gute Haftungseigenschaften aufweisen.

Der Klebstoff des Vergleichsbeispiels ***25*** enthält das Reaktionsprodukt ***R15***, wie es in US 6,703,453 offenbart ist, und stellt kein erfindungsgemässes Bespiel dar. Die Hautbildungszeit dieses Klebstoffes ist im Vergleich zu den erfindungsgemässen Klebstoffen der Beispiele ***22*** bis ***24*** stark erhöht, was für einen praxistauglichen Einsatz als Klebstoff ein grosser Nachteil ist.

Der Klebstoff des Vergleichsbeispiels ***26*** enthält weder ein Reaktionsprodukt **R** noch zusätzliches Silan. Er weist eine lange Hautbildungszeit sowie unbefriedigende Haftungseigenschaften auf.

Der Klebstoff des Vergleichsbeispiels ***27*** enthält anstelle eines Reaktionsproduktes **R** zusätzliches Aminosilan **A1**. Die Hautbildungszeit und die Haftungseigenschaften sind zwar gut, die Bruchdehnung ist jedoch deutlich tiefer als bei den andern Klebstoffen, was für einen Einsatz als elastischer Klebstoff nachteilig ist.

**Tabelle 4: Zusammensetzung und Prüfresultate der Klebstoffe der Beispiele 22 bis 24 und der Vergleichsbeispiele 25 bis 27. Mengenangaben sind in Gewichtsteilen.**

| **Beispiel** | ***22*** | ***23*** | ***24*** | ***25*** (Vgl.) | ***26*** (Vgl.) | ***27*** (Vgl.) |
|---|---|---|---|---|---|---|
| **Zusammensetzung:** | | | | | | |
| *Basisformulierung 3* | 100 | 100 | 100 | 100 | 100 | 100 |
| Aminosilan **A1** | - | - | - | - | - | DAMO¹ |
| Menge | | | | | | 1.0 |
| Reaktionsprodukt **R** | ***R1*** | ***R3*** | ***R5*** | ***R15*** | - | - |
| Menge | 1.8 | 1.8 | 1.8 | 1.8 | | |
| **Prüfergebnisse:** | | | | | | |
| Hautbildungszeit [min] | 80 | 90 | 90 | 600 | 1200 | 60 |
| Zugfestigkeit [MPa] | 3.0 | 2.9 | 3.1 | 3.1 | 1.8 | 2.8 |
| Bruchdehnung[%] | 500 | 500 | 490 | 510 | 550 | 330 |
| **Haftung:** | | | | | | |
| Aluminium AIMgSi1 | 1 | 1 | 1 | 3 | 4 | 1 |
| PVC | 1 | 2 | 2 | 1 | 4 | 1 |

| | | | | | | |
|---|---|---|---|---|---|---|
| ¹DAMO = Dynasylan^{®} DAMO (Degussa). | | | | | | |

## Patentansprüche

1. Feuchtigkeitshärtende Zusammensetzung umfassend
a) mindestens ein silanfunktionelles Polymer **P** mit Endgruppen der Formel (I) 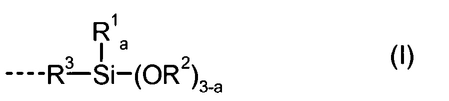 wobei
R¹ für eine Alkylgruppe mit 1 bis 8 C-Atomen, insbesondere für eine Methyl- oder für eine Ethylgruppe, steht;
R² für eine Acylgruppe oder Alkylgruppe mit 1 bis 5 C-Atomen, insbesondere für eine Methylgruppe oder für eine Ethylgruppe oder für eine Isopropylgruppe, steht;
R³ für eine lineare oder verzweigte, gegebenenfalls cyclische, Alkylengruppe mit 2 bis 12 C-Atomen, gegebenenfalls mit aromatischen Anteilen, und gegebenenfalls mit einem oder mehreren Heteroatomen, insbesondere Stickstoffatomen, steht;
a für 0, 1 oder 2, bevorzugt für 0 oder 1, steht; und
b) mindestens ein Reaktionsprodukt **R**, hergestellt aus mindestens einem Aminosilan **A1** mit mindestens einer primären Aminogruppe
und
mindestens einem Silangruppen-freien Alken **M** der Formel (II) oder (III) oder (IV) 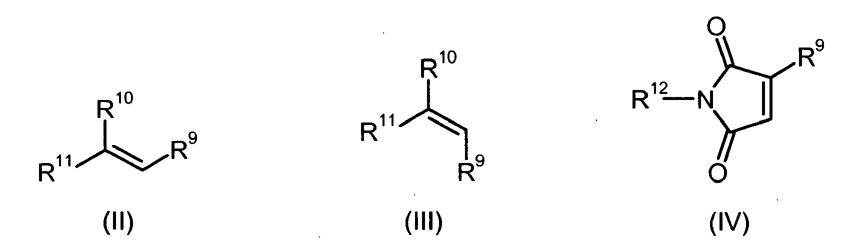 wobei
R⁹ für R¹² oder -CN steht, und
R¹⁰ für einen Substituenten, welcher ausgewählt ist aus der Gruppe bestehend aus -COOR¹², -CONHR¹², -CON(R¹²)₂, -CN, -NO₂, -PO(OR¹²)₂, -SO₂R¹² und -SO₂OR¹², steht,
R¹¹ für einen Substituenten, welcher ausgewählt ist aus der Gruppe bestehend aus R¹², -COOR¹², -CH₂-COOR¹² und -CN, steht, und
R¹² für ein Wasserstoffatom oder einen einwertigen, gegebenenfalls Heteroatome aufweisenden, Kohlenwasserstoffrest mit 1 bis 20 C-Atomen steht.

2. Feuchtigkeitshärtende Zusammensetzung gemäss Anspruch 1, **dadurch gekennzeichnet, dass** das silanfunktionelle Polymer **P** ein Polymer **P1** ist, welches durch die Umsetzung eines Aminosilans **A2** mit einem endständige Isocyanatgruppen aufweisenden Polyurethanpolymer hergestellt wird, wobei das Aminosilan **A2** die Formel (V) aufweist 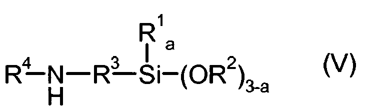 wobei R⁴ für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (VI) steht, 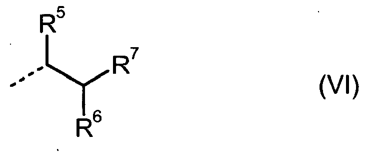 wobei
R⁵ und R⁶, unabhängig voneinander, für ein Wasserstoffatom oder für einen Rest aus der Gruppe umfassend R⁸, -COOR⁸ und -CN steht, und
R⁷ für ein Wasserstoffatom oder für einen Rest aus der Gruppe umfassend -CH₂-COOR⁸, -COOR⁸, CONHR⁸, -CON(R⁸)₂, -CN, -NO₂, -PO(OR⁸)₂, -SO₂R⁸ und -SO₂OR⁸ steht,
wobei R⁸ für einen, gegebenenfalls mindestens ein Heteroatom enthaltenden, Kohlenwasserstoffrest mit 1 bis 20 C-Atomen steht.

3. Feuchtigkeitshärtende Zusammensetzung gemäss Anspruch 1, **dadurch gekennzeichnet, dass** das silanfunktionelle Polymer **P** ein Polymer **P2** ist, welches erhältlich ist durch die Umsetzung eines Isocyanatosilans **IS** mit einem endständige Hydroxylgruppen aufweisenden Polymer.

4. Feuchtigkeitshärtende Zusammensetzung gemäss Anspruch 3, **dadurch gekennzeichnet, dass** das Isocyanatosilan **IS** die Formel (VII) aufweist.

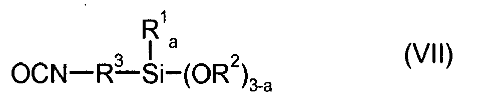

5. Feuchtigkeitshärtende Zusammensetzung gemäss Anspruch 1, **dadurch gekennzeichnet, dass** das silanfunktionelle Polymer **P** ein Polymer **P3** ist, welches erhältlich ist durch die Hydrosilylierung eines Polymers mit endständigen Doppelbindungen.

6. Feuchtigkeitshärtende Zusammensetzung gemäss einem der vorhergehenden Ansprüche, **dadurch gekennzeichnet, dass** das Aminosilan A1 die Formel (VIII) aufweist, 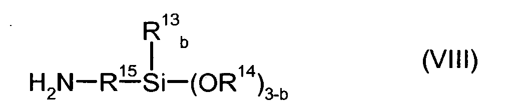 wobei
R¹³ für eine Alkylgruppe mit 1 bis 8 C-Atomen, bevorzugt für eine Methyl- oder für eine Ethylgruppe, insbesondere für eine Methylgruppe, steht,
R¹⁴ für eine Acylgruppe oder eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
R¹⁵ für eine lineare oder verzweigte, gegebenenfalls cyclische, Alkylengruppe mit 1 bis 20 C-Atomen, gegebenenfalls mit aromatischen Anteilen, und gegebenenfalls mit Heteroatomen, insbesondere Ether-Sauerstoff oder sekundärem Amin-Stickstoff, steht, und
b für 0, 1 oder 2, bevorzugt für 0 oder 1, steht.

7. Feuchtigkeitshärtende Zusammensetzung gemäss Anspruch 6, **dadurch gekennzeichnet, dass** das Aminosilan **A1** die Formel (IX) aufweist 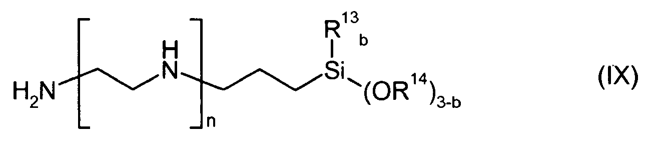 mit n = 0, 1 oder 2 und b = 0 oder 1 und R¹⁴ = Methyl oder Ethyl oder Isopropyl.

8. Feuchtigkeitshärtende Zusammensetzung gemäss einem der vorhergehenden Ansprüche, **dadurch gekennzeichnet, dass** das Silangruppen-freie Alken **M** ein (Meth)acrylsäureester ist.

9. Feuchtigkeitshärtende Zusammensetzung gemäss einem der Ansprüche 1 bis 7, **dadurch gekennzeichnet, dass** das Silangruppen-freie Alken **M** ausgewählt ist aus der Gruppe bestehend aus Tetrahydrofurfuryl-, Isobornyl-, Isodecyl-, Hexyl-, Lauryl-, Stearyl-, Ethylenglykol-dicyclopentenylether-, 2-Hydroxyethyl- und 3-Hydroxypropyl-(meth)acrylat, (Meth)acrylamid, N-Methyl(meth)acrylamid, N,N-Dimethyl(meth)acrylamid, Dimethyl-, Diethyl- und Dibutyl-phosphonat, Acrylnitril, 2-Pentennitril, Fumarodinitril und β-Nitrostyrol, sowie Mischungen aus diesen Verbindungen.

10. Feuchtigkeitshärtende Zusammensetzung gemäss einem der vorhergehenden Ansprüche, **dadurch gekennzeichnet, dass** sie einen Gehalt an Reaktionsprodukt **R** von 0.1 - 10 Gewichts-%, bevorzugt 0.3 - 5 Gewichts-%, aufweist.

11. Verwendung eines Reaktionsproduktes **R**, wie es als Bestandteil einer feuchtigkeitshärtenden Zusammensetzung gemäss einem der Ansprüche 1 bis 10 beschrieben ist, als Haftvermittler für feuchtigkeitshärtende Zusammensetzungen, welche silanfunktionelle Polymere mit Endgruppen der Formel (I) enthalten 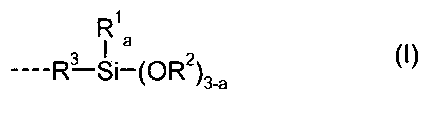 wobei
R¹ für eine Alkylgruppe mit 1 bis 8 C-Atomen, insbesondere für eine Methyl- oder für eine Ethylgruppe, steht;
R² für eine Acylgruppe oder Alkylgruppe mit 1 bis 5 C-Atomen, insbesondere für eine Methylgruppe oder für eine Ethylgruppe oder für eine Isopropylgruppe, steht;
R³ für eine lineare oder verzweigte, gegebenenfalls cyclische, Alkylengruppe mit 2 bis 12 C-Atomen, gegebenenfalls mit aromatischen Anteilen, und gegebenenfalls mit einem oder mehreren Heteroatomen, insbesondere Stickstoffatomen, steht;
a für 0, 1 oder 2, bevorzugt für 0 oder 1, steht.

12. Verwendung einer Zusammensetzung gemäss einem der Ansprüche 1 bis 10 als Dichtstoff.

13. Verwendung einer Zusammensetzung gemäss einem der Ansprüche 1 bis 10 als Klebstoff.

14. Verfahren des Abdichtens umfassend die Schritte
(i) Applikation einer Zusammensetzung gemäss einem der Ansprüche 1 bis 10 zwischen ein Substrat **S1** und ein Substrat **S2,**
(ii) Aushärtung der Zusammensetzung durch Kontakt mit Feuchtigkeit,
wobei die Substrate **S1** und **S2** gleich oder verschieden voneinander sind.

15. Verfahren des Verklebens umfassend die Schritte
(i) Applikation einer Zusammensetzung gemäss einem der Ansprüche 1 bis 10 auf ein Substrat **S1** und/oder ein Substrat **S2,**
(ii) Fügen der Teile innerhalb der Offenzeit
(iii) Aushärtung der Zusammensetzung durch Kontakt mit Feuchtigkeit,
wobei die Substrate **S1** und **S2** gleich oder verschieden voneinander sind.

16. Abgedichteter oder verklebter Artikel, welcher mittels eines Verfahrens gemäss einem der Ansprüche 14 oder 15 hergestellt wird.

## Claims

1. A moisture-curing composition comprising
a) at least one silane-functional polymer **P** having end groups of the formula (I) 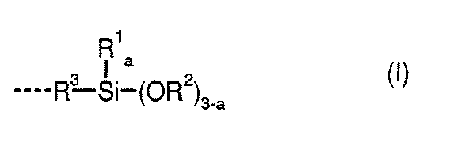 where
R¹ is an alkyl group having 1 to 8 C atoms, more particularly a methyl or an ethyl group;
R² is an acyl group or alkyl group having 1 to 5 C atoms, more particularly a methyl group or an ethyl group or an isopropyl group;
R³ is a linear or branched, optionally cyclic, alkylene group having 2 to 12 C atoms, optionally with aromatic fractions, and optionally with one or more heteroatoms, more particularly nitrogen atoms;
a is 0, 1 or 2, preferably 0 or 1; and
b) at least one reaction product **R**, prepared from at least one aminosilane **A1** having at least one primary amino group
and
at least one silane-group-free alkene **M** of the formula (II) or (III) or (IV) 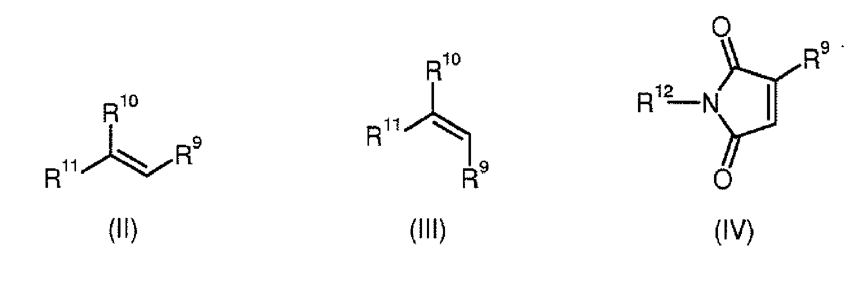
where
R⁹ is R¹² or -CN, and
R¹⁰ is a substituent which is selected from the group consisting of -COOR¹², -CONHR¹², -CON(R¹²)₂, -CN, -NO₂, -PO(OR¹²)₂, -SO₂R¹², and -SO₂OR¹²,
R¹¹ is a substituent which is selected from the group consisting of -R¹², -COOR¹², -CH₂-COOR¹², and -CN, and
R¹² is a hydrogen atom or a monovalent, optionally heteroatom-containing, hydrocarbon radical having 1 to 20 C atoms.

2. The moisture-curing composition of claim 1,
**characterized in that** the silane-functional polymer **P** is a polymer **P1** which is prepared by the reaction of an aminosilane **A2** with a polyurethane polymer containing terminal isocyanate groups, the aminosilane **A2** having the formula (V) 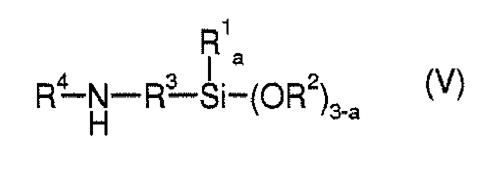 where R⁴ is a hydrogen atom or is a linear or branched hydrocarbon radical having 1 to 20 C atoms which optionally contains cyclic fractions, or is a radical of the formula (VI) 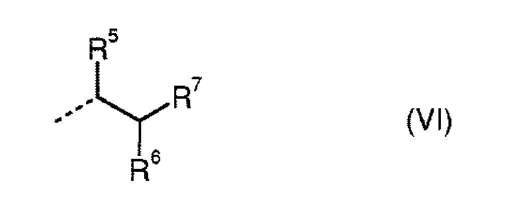 where
R⁵ and R⁶, independently of one another, are each a hydrogen atom or a radical from the group encompassing -R⁸, -COOR⁸, and -CN, and
R⁷ is a hydrogen atom or is a radical from the group encompassing -CH₂-COOR⁸, -COOR⁸, -CONHR⁸, -CON(R⁸)₂, -CN, -NO₂, - -PO(OR⁸)₂, -SO₂R⁸, and -SO₂OR⁸,
where R⁸ is a hydrocarbon radical having 1 to 20 C atoms and optionally containing at least one heteroatom.

3. The moisture-curing composition of claim 1, **characterized in that** the silane-functional polymer **P** is a polymer **P2** which is obtainable by the reaction of an isocyanatosilane **IS** with a polymer containing terminal hydroxyl groups.

4. The moisture-curing composition of claim 3, **characterized in that** the isocyanatosilane **IS** has the formula (VII)

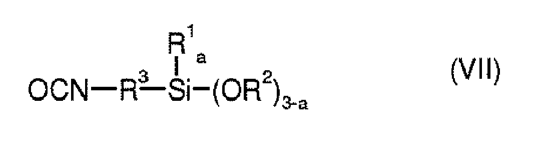

5. The moisture-curing composition of claim 1, **characterized in that** the silane-functional polymer **P** is a polymer **P3** which is obtainable by the hydrosilylation of a polymer having terminal double bonds.

6. The moisture-curing composition of any one of the preceding claims, **characterized in that** the aminosilane **A1** has the formula (VIII) 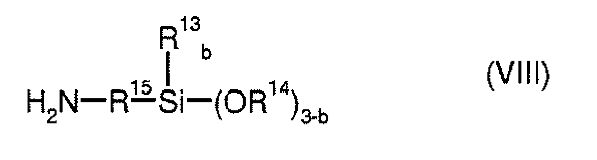 where
R¹³ is an alkyl group having 1 to 8 C atoms, preferably a methyl group or an ethyl group, more particularly a methyl group,
R¹⁴ is an acyl group or an alkyl group having 1 to 5 C atoms, preferably a methyl group or an ethyl group or an isopropyl group, more particularly a methyl group or an ethyl group,
R¹⁵ is a linear or branched, optionally cyclic, alkylene group having 1 to 20 C atoms, optionally with aromatic fractions, and optionally with heteroatoms, more particularly ether oxygen or secondary amine nitrogen, and
b is 0, 1 or 2, preferably 0 or 1.

7. The moisture-curing composition of claim 6, **characterized in that** the aminosilane **A1** has the formula (IX) 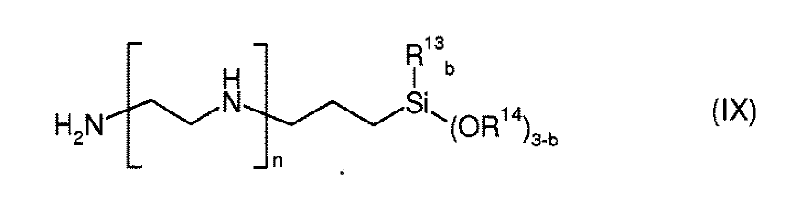 with n = 0, 1 or 2 and b = 0 or 1, and R¹⁴ = methyl or ethyl or isopropyl.

8. The moisture-curing composition of any one of the preceding claims, **characterized in that** the silane-group-free alkene **M** is a (meth)acrylic ester.

9. The moisture-curing composition of any one of claims 1 to 7, **characterized in that** the silane-group-free alkene **M** is selected from the group consisting of tetrahydrofurfuryl, isobornyl, isodecyl, hexyl, lauryl, stearyl, ethylene glycol dicyclopentenyl ether, 2-hydroxyethyl, and 3-hydroxypropyl (meth)acrylate, (meth)acrylamide, N-methyl(meth)acrylamide, N,N-dimethyl(meth)acrylamide, dimethyl, diethyl, and dibutyl phosphonate, acrylonitrile, 2-pentenenitrile, fumaronitrile, and β-nitrostyrene, and also mixtures of these compounds.

10. The moisture-curing composition of any one of the preceding claims, **characterized in that** it has a reaction product **R** content of 0.1% - 10% by weight, preferably 0.3% - 5% by weight.

11. The use of a reaction product **R** as described as a constituent of a moisture-curing composition of any one of claims 1 to 10 as an adhesion promoter for moisture-curing compositions which comprise silane-functional polymers having end groups of the formula (I) 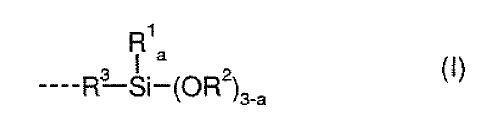 where
R¹ is an alkyl group having 1 to 8 C atoms, more particularly a methyl or an ethyl group;
R² is an acyl group or alkyl group having 1 to 5 C atoms, more particularly a methyl group or an ethyl group or an isopropyl group;
R³ is a linear or branched, optionally cyclic, alkylene group having 2 to 12 C atoms, optionally with aromatic fractions, and optionally with one or more heteroatoms, more particularly nitrogen atoms;
a is 0, 1 or 2, preferably 0 or 1.

12. The use of a composition of any one of claims 1 to 10 as a sealant.

13. The use of a composition of any one of claims 1 to 10 as an adhesive.

14. A method of sealing comprising the steps of
(i) applying a composition of any one of claims 1 to 10 between a substrate **S1** and a substrate **S2,**
(ii) curing the composition by contact with moisture,
the substrates **S1** and **S2** being alike or different from one another.

15. A method of adhesive bonding comprising the steps of
(i) applying a composition of any one of claims 1 to 10 to a substrate **S1** and/or a substrate **S2,**
(ii) joining the parts within the open time,
(ii) curing the composition by contact with moisture,
the substrates **S1** and **S2** being alike or different from one another.

16. A sealed or adhesively bonded article produced by means of a method of any one of claims 14 or 15.

## Revendications

1. Composition durcissable à l'humidité, comprenant
a) au moins un polymère **P** à fonction silane, comportant des groupes en bout de chaîne de formule (I) 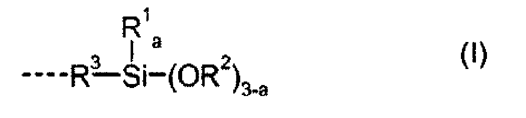 dans laquelle
R¹ représente un groupe alkyle ayant de 1 à 8 atomes de carbone, en particulier un groupe méthyle ou un groupe éthyle ;
R² représente un groupe acyle ou un groupe alkyle ayant de 1 à 5 atomes de carbone, en particulier un groupe méthyle ou un groupe éthyle ou un groupe isopropyle ;
R³ représente un groupe alkylène linéaire ou ramifié, éventuellement cyclique, ayant de 2 à 12 atomes de carbone, comportant éventuellement des fragments aromatiques, et comportant éventuellement un ou plusieurs hétéroatomes, en particulier des atomes d'azote ;
a représente 0, 1 ou 2, de préférence 0 ou 1 ; et
b) au moins un produit de réaction **R**, obtenu à partir d'au moins un aminosilane **A1** comportant au moins un groupe amino primaire
et
d'au moins un alcène **M** dépourvu de groupes silane, de formule (II) ou (III) ou (IV) 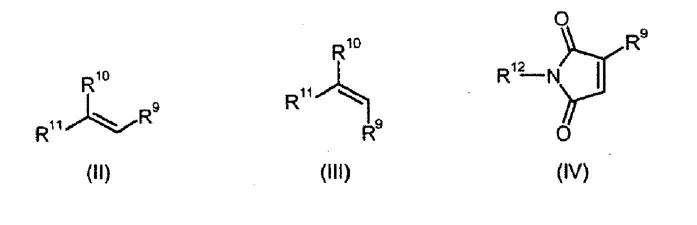 où
R⁹ représente R¹² ou -CN, et
R¹⁰ représente un substituant qui est choisi dans l'ensemble constitué par -COOR¹², -CONHR¹², -CON(R¹²)₂, -CN, -NO₂, -PO(OR¹²)₂, -SO₂R¹² et -SO₂OR¹²,
R¹¹ représente un substituant qui est choisi dans l'ensemble constitué par R¹², -COOR¹², -CH₂COOR¹² et -CN, et
R¹² représente un atome d'hydrogène ou un radical hydrocarboné monovalent ayant de 1 à 20 atomes de carbone, comportant éventuellement des hétéroatomes.

2. Composition durcissable à l'humidité selon la revendication 1, **caractérisée en ce que** le polymère **P** à fonction silane est un polymère **P1** qui est obtenu par la réaction d'un aminosilane **A2** avec un polymère polyuréthanne comportant des groupes isocyanate en bout de chaîne, l'aminosilane **A2** présentant la formule (V) 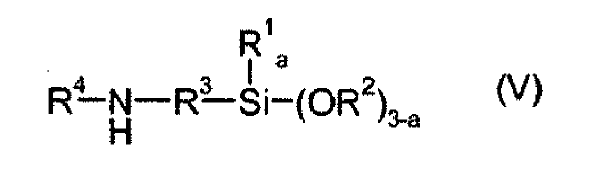 dans laquelle R⁴ représente un atome d'hydrogène ou un radical hydrocarboné linéaire ou ramifié ayant de 1 à 20 atomes de carbone, qui comporte éventuellement des fragments cycliques, ou un radical de formule (VI) 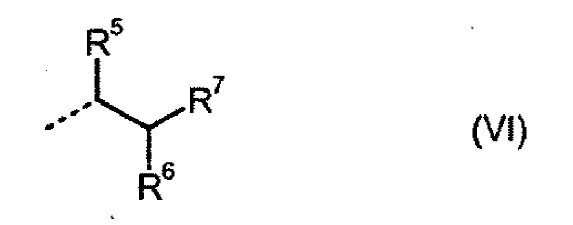 dans laquelle
R⁵ et R⁶ représentent, indépendamment l'un de l'autre, un atome d'hydrogène ou un radical choisi dans l'ensemble comprenant R⁸, -COOR⁸ et -CN, et
R⁷ représente un atome d'hydrogène ou un radical choisi dans l'ensemble comprenant -CH₂-COOR⁸, -COOR⁸, -CONHR⁸, -CON(R⁸)₂, -CN, -NO₂, -PO(OR⁸)₂, -SO₂R⁸ et -SO₂OR⁸,
R⁸ représentant un radical hydrocarboné ayant de 1 à 20 atomes de carbone, comportant éventuellement au moins un hétéroatome.

3. Composition durcissable à l'humidité selon la revendication 1, **caractérisée en ce que** le polymère **P** à fonction silane est un polymère **P2** qui peut être obtenu par la réaction d'un isocyanatosilane **IS** avec un polymère comportant des groupes hydroxy en bout de chaîne.

4. Composition durcissable à l'humidité selon la revendication 3, **caractérisée en ce que** l'isocyanatosilane **IS** présente la formule (VII)

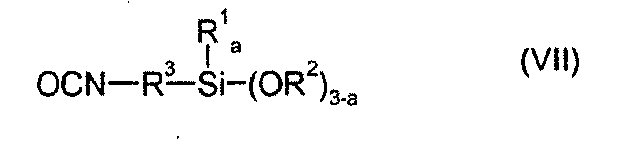

5. Composition durcissable à l'humidité selon la revendication 1, **caractérisée en ce que** le polymère **P** à fonction silane est un polymère **P3** qui peut être obtenu par l'hydrosilylation d'un polymère comportant des doubles liaisons en bout de chaîne.

6. Composition durcissable à l'humidité selon l'une quelconque des revendications précédentes, **caractérisée en ce que** l'aminosilane A1 présente la formule (VIII) 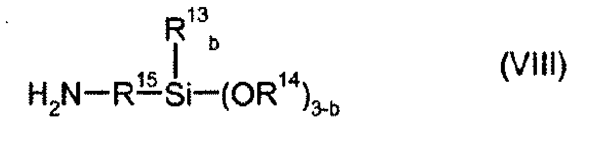 dans laquelle
R¹³ représente un groupe alkyle ayant de 1 à 8 atomes de carbone, de préférence un groupe méthyle ou un groupe éthyle, en particulier un groupe méthyle,
R¹⁴ représente un groupe acyle ou un groupe alkyle ayant de 1 à 5 atomes de carbone, de préférence un groupe méthyle ou un groupe éthyle ou un groupe isopropyle, en particulier un groupe méthyle ou un groupe éthyle,
R¹⁵ représente un groupe alkylène linéaire ou ramifié, éventuellement cyclique, ayant de 1 à 20 atomes de carbone, comportant éventuellement des fragments aromatiques, et comportant éventuellement des hétéroatomes, en particulier d'oxygène en fonction éther ou d'azote en fonction amine secondaire, et
b représente 0, 1 ou 2, de préférence 0 ou 1,

7. Composition durcissable à l'humidité selon la revendication 6, **caractérisée en ce que** l'aminosilane A1 présente la formule (IX) 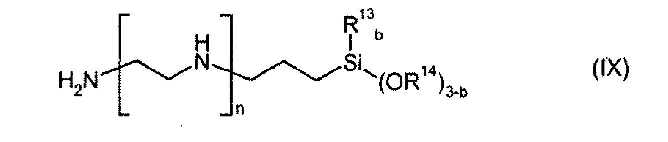 où n = 0, 1 ou 2 et b = 0 ou 1 et R¹⁴ = méthyle ou éthyle ou isopropyle.

8. Composition durcissable à l'humidité selon l'une quelconque des revendications précédentes,
**caractérisée en ce que** l'alcène **M** exempt de groupes silane est un ester d'acide (méth)acrylique.

9. Composition durcissable à l'humidité selon l'une quelconque des revendications 1 à 7, **caractérisée en ce que** l'alcène **M** exempt de groupes silane est choisi dans l'ensemble constitué par les (méth)acrylates de tétrahydrofurfuryle, d'isobornyle, d'isodécyle, d'hexyle, de lauryle, de stéaryle, d'éthylèneglycol-dicyclopentényléther, de 2-hydroxy-éthyle et de 3-hydroxypropyle, le (méth)acrylamide, le N-méthyl(méth)acrylamide, le N,N-diméthyl(méth)-acrylamide, les phosphonates de diméthyle, diéthyle et dibutyle, l'acrylonitrile, le 2-pentène-nitrile, le fumarodinitrile et le β-nitrostyrène, ainsi que des mélanges de ces composés.

10. Composition durcissable à l'humidité selon l'une quelconque des revendications précédentes, **caractérisée en ce qu'**elle présente une teneur en produit de réaction **R** de 0,1 à 10 % en poids, de préférence de 0,3 à 5 % en poids.

11. Utilisation d'un produit de réaction **R,** qui est décrit comme composant d'une composition durcissable à l'humidité selon l'une quelconque des revendications 1 à 10, en tant que promoteur d'adhérence pour des compositions durcissables à l'humidité qui contiennent des polymères à fonction silane comportant des groupes en bout de chaîne de formule (I) 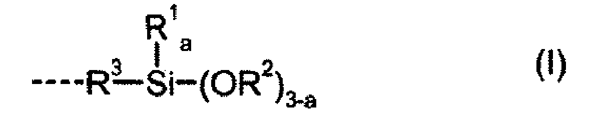 dans laquelle
R¹ représente un groupe alkyle ayant de 1 à 8 atomes de carbone, en particulier un groupe méthyle ou un groupe éthyle ;
R² représente un groupe acyle ou un groupe alkyle ayant de 1 à 5 atomes de carbone, en particulier un groupe méthyle ou un groupe éthyle ou un groupe isopropyle ;
R³ représente un groupe alkylène linéaire ou ramifié, éventuellement cyclique, ayant de 2 à 12 atomes de carbone, comportant éventuellement des fragments aromatiques, et comportant éventuellement un ou plusieurs hétéroatomes, en particulier des atomes d'azote ;
a représente 0, 1 ou 2, de préférence 0 ou 1.

12. Utilisation d'une composition selon l'une quelconque des revendications 1 à 10, en tant que matériau d'étanchéité.

13. Utilisation d'une composition selon l'une quelconque des revendications 1 à 10, en tant qu'adhésif.

14. Procédé d'étanchéification, comprenant les étapes
(i) application d'une composition selon l'une quelconque des revendications 1 à 10 entre un support **S1** et un support **S2,**
(ii) durcissement de la composition par contact avec de l'humidité,
les supports **S1** et **S2** pouvant être identiques ou différents l'un de l'autre.

15. Procédé de collage, comprenant les étapes
(i) application d'une composition selon l'une quelconque des revendications 1 à 10 sur un support **S1** et/ou un support **S2,**
(ii) assemblage des pièces en l'espace du délai d'utilisation
(iii) durcissement de la composition par contact avec de l'humidité, les supports **S1** et **S2** pouvant être identiques ou différents l'un de l'autre.

16. Article étanchéifié ou collé, qui a été obtenu par un procédé selon la revendication 14 ou 15.
